# EUROPEAN PATENT APPLICATION

(11) **EP 1 886 904 A2**
(43) Date of publication of application: **13.02.2008**
(21) Application number: 06380299.5
(22) Date of filing: 17.11.2006
(51) Int. Cl.: B62D 55/075

(54) **Climbing cleaning robot**

(30) Priority: 11.08.2006 ES 200602245
(71) Applicant: Ascend RMM, S.L., 36204 Vigo (Pontevedra) (ES)
(72) Inventor: Moure, Manuel Perez, 36204 Vigo (Pontevedra) (ES)
(74) Representative: Carpintero Lopez, Francisco

(57) **Abstract**

The present invention relates to a climbing cleaning robot applicable for cleaning metallic surfaces, such as wind tower posts (11), having a cleaning equipment (3), view cameras (5), and an electrical control board (8) connected via cable (9) to a remotely located console (10) from where the operation of the robot on the metallic surface is controlled. It has high adherence magnets (12) the attraction side of which is located parallel and close to the plane determined between the lowest points of the wheels (2) to assure the permanent adherence of the robot during its operation on the metallic surface. It also has four drive wheels (2) operated by independent adjustable speed motors (13) which are grouped on a front steering support (14) and on a rear steering support (15), each of which rotates, determining the maneuverability of the robot.

## Description

### OBJECT OF THE INVENTION

The present invention is applicable for performing cleaning jobs in hazardous places and which are hard for workers and technicians to access, such as wind towers, hulls of ships and metallic chimneys, and is comprised within the sector of remote controlled cleaning robots.

The object of the invention relates to carrying out a cleaning robot having means which allow it to climb up a vertical or inclined metallic surface with absolute safety, and it is further provided with a high maneuvering capacity.

### BACKGROUND OF THE INVENTION

The use of several types of remote controlled cleaning robots is known in the field of cleaning hard to access places.

Utility model ES 1 060 196 is known for cleaning air conditioning pipes, describing a small robot provided with a pair of video modules for recording and displaying images, as well as a cleaning module and a case incorporating the module for controlling the movement of the robot and of the cleaning elements, and a display screen for remotely displaying the images captured by the video modules.

On the other hand, patent of invention ES 2 237 326 discloses a remotely controlled robot which is also dedicated to cleaning air conditioning pipes, having an aspiration module including a tool holder arm which allows cleaning ducts having different geometries, and it also incorporates a differential drive system with independent propulsion for the rear wheels and a front steering system formed by a pair of wheels assembled on a vertical axle actuated by a servomotor.

Cleaning robots are also used in other applications, such as for example for cleaning industrial chimneys, as is the case of the robot disclosed in patent of invention ES 2 221 567. This robot has a rotating brush, an aspiration duct, minicameras for sending images to a control box from where the operations of the robot are controlled and caterpillar-type drive means for moving inside the pipe.

The sliding climbing robot object of patent of invention ES 2 230 953 allows performing jobs in metallic building structures, nuclear power plants, metallic bridges, hulls of ships or airplanes and the like, and it is based on a parallel structure formed by two rings bound by linear actuations and legs originating from said rings which allow the robot to climb and orient itself in space, which legs having a variable extension system formed by a linear compression motor and an electromagnet-type holding device.

The climbing cleaning robot object of patent of invention application P 200503223, belonging to the same applicant of the present invention, is also used for the same applications described in the previous paragraph, contemplating the incorporation of a drive system formed by a double caterpillar structure having electromagnets which allow moving up or down and right or left to perform cleaning tasks, especially in wind towers.

Wind tower maintenance tasks are generally carried out by specialized personnel who are not free of risk due to performing these jobs at a great height and due to the use of rather unreliable and/or hazardous support methods, or in the event of using motorized platforms, they are particularly expensive. The solution described in patent of invention P 200503223 is valid for its use in wind towers, however it can be optimized.

### DESCRIPTION OF THE INVENTION

The climbing cleaning robot forming the object of the invention optimizes the operating conditions of the remote controlled climbing systems which must climb up very steep or vertical surfaces, especially in relation to the fixing, maneuverability and operating speed conditions.

The robot incorporates a chassis and power wheels forming the drive means facilitating the movement of the robot on a metallic surface, such as the post of a wind tower for example, combined with high adhesion magnets, the attraction side of which is preferably parallel and close to the plane determined between the lowest points of the wheels, thus assuring the permanent adhesion of the robot to the metallic surface during its movement.

It is preferably contemplated that the robot incorporates four drive wheels powered by independent adjustable speed motors and that the wheels are grouped in tandem in twos: on a front steering support having two front wheels and on a rear steering support having two rear wheels, each of which is connected to a controlled fulcrum pin which preferably rotate due to hydraulic means with respect to the chassis of the robot to achieve maneuverability of the robot in different directions.

The magnets can be grouped arranged in rows longitudinally and on the underside of the chassis of the robot and between the wheels, preferably in two lateral rows located on both sides of the chassis, which are very slightly separated in the order of about 1 to 2 cm from the metallic surface on which they adhere due to magnetic attraction during the operative position of the robot.

The magnets are spaced in a single row. By way of example, it could be said that 10x10 cm square magnets with a total adhesion force of 100 kg each, located 5 in a row in respective lateral rows, determine a total adhesion strength of the robot to a wind tower of the order of 1000 kg.

It has been provided in a possible solution that the magnets of the same row are connected by means of support plate and that the latter can move vertically due to the action of at least one vertical movement cylinder which allows adjusting the position of the magnets in height. The maximum lift position of the magnets is set when the robot is not in operation and for the purpose of facilitating its transfer or storage, given that the greater distance with respect to the running surface will reduce the force of magnetic attraction, thus preventing it from adhering on other surfaces.

In order to facilitate the integral vertical movement of the magnets connected to the same support plate, it has been provided that the support to which each of the magnets is anchored to is joined to a carriage provided with mobility in the vertical direction moving with respect to a vertical guide fixed to the chassis when the mentioned vertical movement cylinder is actuated.

The robot is connected by a cable to a control panel from where the operation of the robot is controlled, whether it be the movement or actuation of the different equipment assembled on the robot.

It is important to first mention among this equipment the cleaning mechanism generally comprising a water deposit, a detergent deposit, a steam generator associated to a projection duct for cleaning the surface with the mixture sprayed under high pressure and at a high temperature, for example in the order of 180°, and an aspiration duct associated to a deposit collecting the released dirt.

Cameras can also be assembled on the chassis which allow viewing the working environment so as to facilitate control tasks for the operator in real time, and it can also include a signaling beacon with a stroboscopic light and a lighting system.

Therefore the steering of the movement of the robot, the actuation of the cleaning system, of the cameras and of the lights can be controlled from the control panel.

The possibility of the robot having a wireless console controlling the different operations of the robot via radio is additionally contemplated.

In addition, the chassis is preferably a high-strength reinforced aluminum single-beam type and can incorporate assembled thereon a fiberglass fairing that is highly resistant to impacts and the wind.

### DESCRIPTION OF THE DRAWINGS

To complement the description being made and for the purpose of aiding to better understand the features of the invention according to a preferred practical embodiment thereof, a set of drawings is attached as an integral part of said description which shows the following with an illustrative and non-limiting character:
Figure 1 shows a perspective view of the climbing cleaning robot.
Figure 2 shows an elevational view of the climbing cleaning robot climbing up or down on a wind tower.
Figure 3 shows a side view of the climbing robot in which it has been shown without the cleaning system, and without the viewing systems and other accessories in the operative position of the magnets.
Figure 4 shows a plan view of the climbing robot according to the scheme of the previous figure.
Figure 5 shows a schematic elevational view in which the chassis of the robot has been shown, and one of the rows of magnets in the upper withdrawn position and the other row of magnets in the lower position can be observed.

### PREFERRED EMBODIMENT OF THE INVENTION

A preferred embodiment of the climbing cleaning robot object of this invention is described below in view of the figures.

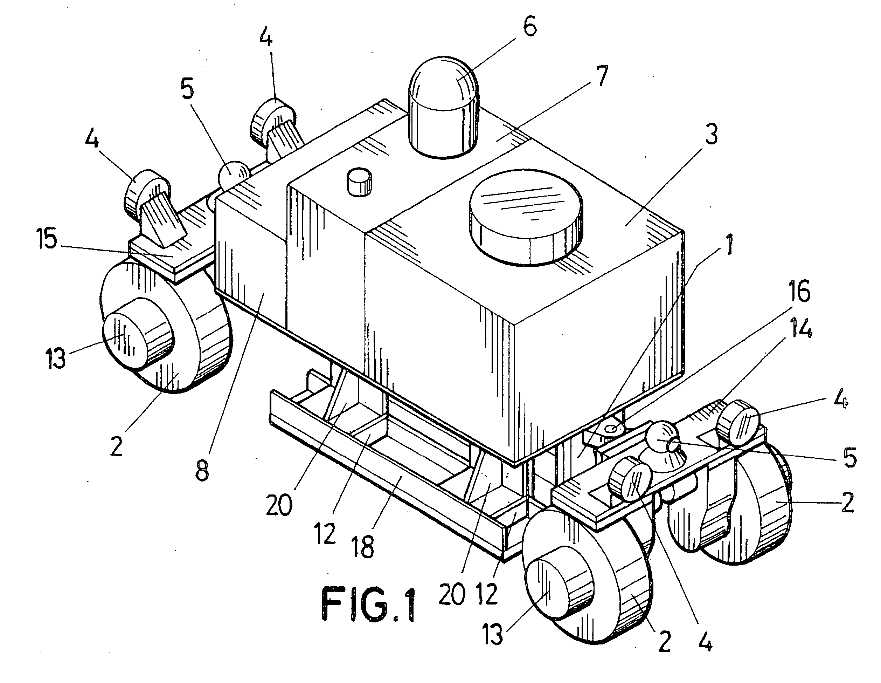

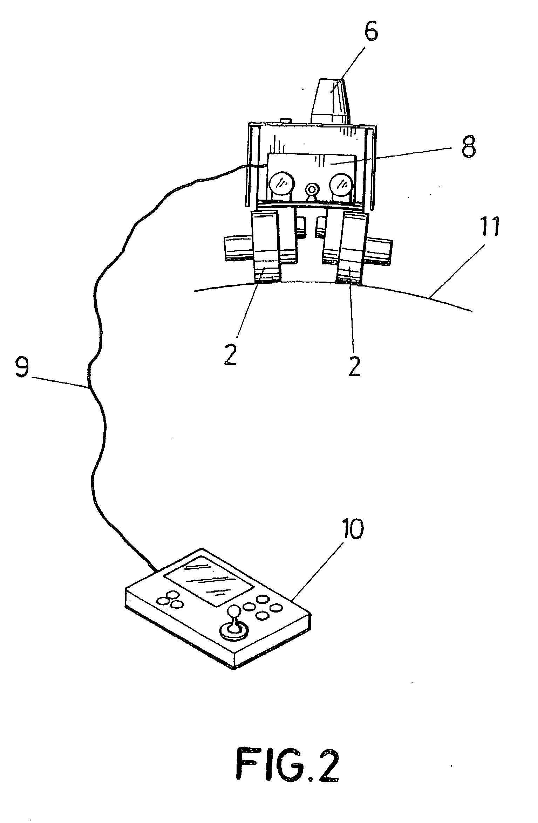

Figure 1 shows the climbing cleaning robot conventionally provided with a chassis (1) and wheels (2), having a cleaning equipment (3), a lighting system (4), view cameras (5), a signaling beacon (6), a battery (7) and an electrical control board (8) connected via cable (9) with a remotely located console (10) from where the operation of the robot on inclined or vertical metallic surfaces, for example on a wind tower (11), as shown in Figure 2, is controlled.

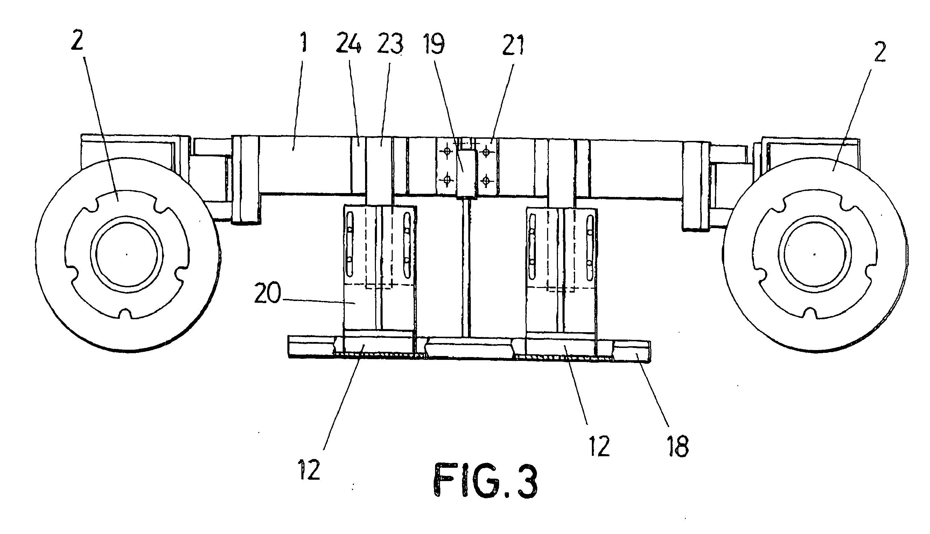

As can be seen in Figure 3 the climbing cleaning robot incorporates high adherence magnets (12) the attraction side of which is located parallel and close to the plane determined between the lowest points of the wheels (2), thus assuring the permanent adherence of the robot during its operation on the metallic surface.

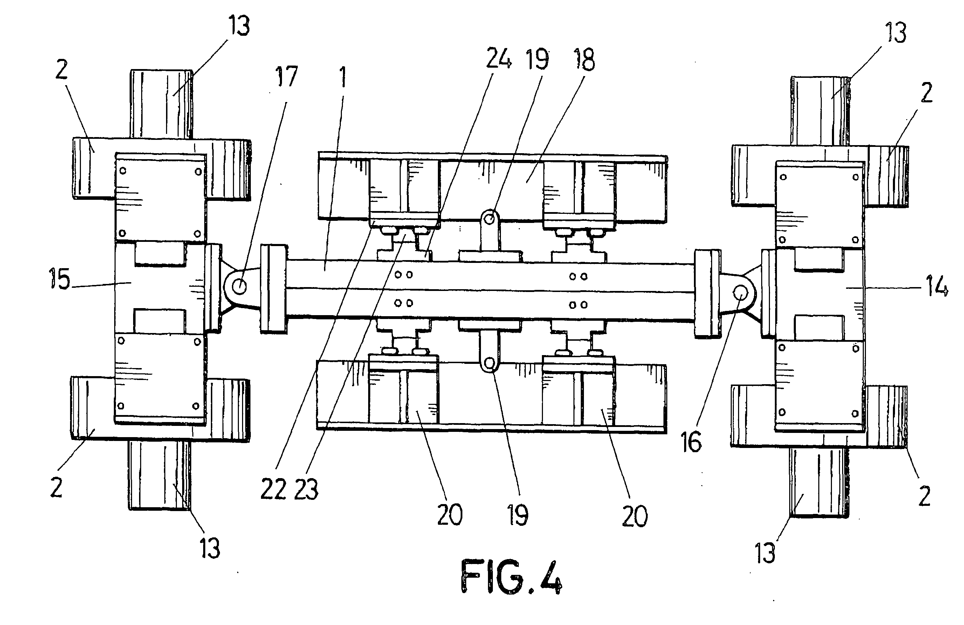

In combination with the high adherence magnets (12) and to provide the robot with mobility, it is contemplated that the latter has four drive wheels (2) operated by independent adjustable speed motors (13), as shown in Figure 4 for example.

In the same Figure 4, it can be observed that the wheels (2) are grouped in a front steering support (14) provided with two front wheels (2) and in a rear steering support (15) provided with two rear wheels (2), each of which rotates in a hinged manner with respect to the chassis (1) due to the action of respective front (16) and rear (17) pins. The combined action of both steering supports (14, 15) determines the maneuverability of the robot in different directions.

According to the depiction of Figure 3 the previously mentioned magnets (12) are grouped in rows arranged longitudinally and on the underside of the chassis (1) of the robot and between the wheels (2). Figure 4 shows two lateral rows of magnets (12) located on both sides of the chassis (1), each of them grouped on a support plate (18).

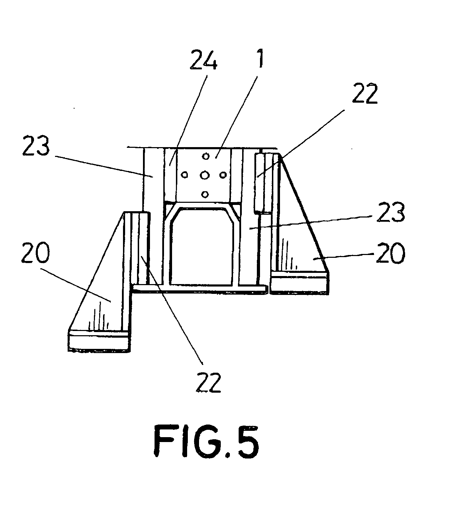

According to Figure 3, each of the support plates (18) is connected to the end of the rod of a vertical movement cylinder (19), which is fixed to the chassis (1) with the aid of a cylinder holder (21) and causes the support plate (18) to move between a lower position corresponding to the operative situation of the magnets (12) on the metallic surface, which situation is shown in Figure 3, and an upper inactive position of the magnets (12), shown in Figure 5, for the support plate (18) on the right.

To facilitate this vertical movement of the support plate (18) holding the magnets (12), it is contemplated that each of the magnets (12) is connected to the base of an angular support (20), in turn joined at its vertical section to a carriage (22) which moves in a guided manner in the vertical direction on a guide (23) associated to the chassis (1), preferably with the aid of a guide holder (24), all as is shown in Figures 3, 4 and 5.

## Claims

1. A climbing cleaning robot applicable for cleaning metallic surfaces, such as wind tower posts (11), comprising a chassis (1) and wheels (2), having a cleaning equipment (3), view cameras (5), and an electrical control board (8) connected via cable (9) to a remotely located console (10) from where the operation of the robot on the metallic surface is controlled, **characterized in that** it incorporates high adherence magnets (12) the attraction side of which is located parallel and close to the plane determined between the lowest points of the wheels (2) to assure the permanent adherence of the robot during its operation on the metallic surface.

2. A climbing cleaning robot according to claim 1, **characterized in that** the magnets (12) are grouped in rows arranged longitudinally and on the underside of the chassis (1) of the robot and between the wheels (2).

3. A climbing cleaning robot according to claim 2, **characterized in that** the magnets (12) of the same row of magnets are connected to a support plate (18).

4. A climbing cleaning robot according to claims 2 or 3, **characterized in that** it incorporates two lateral rows of magnets (12) located on both sides of the chassis (1).

5. A climbing cleaning robot according to claim 3, **characterized in that** each of the support plates (18) is connected to the end of the rod of a vertical movement cylinder (19) associated to the chassis (1) which causes the support plate (18) to move between a lower position corresponding to the operative situation of the magnets (12) on the metallic surface and an upper inactive position of the magnets (12).

6. A climbing cleaning robot according to claim 5, **characterized in that** each of the magnets (12) is connected to the base of an angular support (20), in turn joined at its vertical section to a carriage (22) which moves in a guided manner in the vertical direction on a guide (23) associated to the chassis (1) due to the action of the vertical movement cylinder (19) on the support plate (18).

7. A climbing cleaning robot according to claim 1, **characterized in that** the four wheels (2) are drive wheels and are operated by independent adjustable speed motors (13).

8. A climbing cleaning robot according to the claims 1 and 7, **characterized in that** the wheels (2) are grouped on a front steering support (14) provided with two front wheels (2) and on a rear steering support (15) provided with two rear wheels (2), each of which rotates in a hinged manner with respect to the chassis (1) due to the action of respective controlled front (16) and rear (17) pins, determining the maneuverability of the robot in different directions.
